# EUROPEAN PATENT APPLICATION

(11) **EP 1 075 794 A1**
(43) Date of publication of application: **14.02.2001**
(21) Application number: 00202813.2
(22) Date of filing: 09.08.2000
(51) Int. Cl.: A23G 9/02, A23P 1/08, A23G 9/04

(54) **Frozen food**

(30) Priority: 13.08.1999 NL 1012820
(71) Applicant: Friesland Brands B.V., 8937 AC Leeuwarden (NL)
(72) Inventor: Spelmans, Luc Bart, 3800 Sint-Truiden (BE); Clauwaart, Werner Marie Camiel, 1702 Groot Bijgaarden (BE)
(74) Representative: Prins, Adrianus Willem

(57) **Abstract**

The invention relates to a frozen food having improved processability and to a method for preparing same. More specifically, the invention relates to a food in frozen condition which comprises small particles, which particles are provided with a coating suitable for consumption. The frozen food according to the invention is obtained by forming particles of a frozen food followed by contacting these particles with a coating-forming material under such conditions that a coating is formed on and around the particles.

## Description

The invention relates to a frozen food having improved processability and to a method for preparing same. More specifically, the invention relates to a food in frozen condition consisting of small individual particles.

Frozen foods, and mainly those having a temperature of ―5°C or less, intended for direct use by the consumer, have the drawback that through the required low storage temperature the consistency is not very suitable for being readily scooped, divided and/or otherwise processed or dosed. An example of such frozen foods is consumption ice. It is usually presented to the consumer in the form of a frozen clod or lump, served in a cup or on a dish or provided with, for example, a wooden aid or an aid baked from dough directed to consumption out of the hand.

Because of the risk of structural and/or microbiological decay the temperature of many frozen foods may usually not exceed ―4°C. Often the foods are substantially deeper cooled for transport or storage purposes, for example to ―18°C or to ―40°C. Deep frozen products must be cooled to at least ―18°C. The result of the frozen condition is that during use it is sometimes hard to scoop, divide and/or otherwise process or dose the product. This specifically holds if the product is directly used from the freezing storage in the frozen condition. Warming up, for example by storing the frozen product at room temperature for some time, is often the only practical manner of making the product processable. For some foods this need not be a problem, but if foods are involved which are to be served and/or eaten cold and specifically in frozen condition, such as consumption ice, this may cause problems. Specifically for use on a commercial scale of, for example, consumption ice this may have disadvantageous effects. If, for example, the temperature has been once above a critical value, for example above ―4°C, further use can only be safe if the complete supply is pasteurized again.

It is an object of the invention to provide a frozen food which can be directly, that is to say in frozen condition, readily scooped, divided and/or otherwise processed, without needing to warm it up first or without needing to have it warm up in the ambiance. More specifically, it is an object of the invention to find a solution for the processing or dosing problem of foods which are to be presented cold, which usually means ―5°C or colder, for consumption, such as consumption ice. Besides consumption ice, specifically all kinds of culinary and savory sauces, egg products, whipped cream etc. in bulk packages may be considered here.

The term 'processable' is understood to mean: scoopable, pourable or otherwise dosable and/or apportionable. Accordingly, this is not understood to mean packed goods, such as products which are packed and/or presented individually, such as, for example, chocolate consumption ices or chocolate sweets. Such products cannot be regarded as 'particles' according to the present specification and claims. Particles according to the present invention contribute to the processability of the products because of their collective character.

In the prior art, it has been proposed to improve the processability of frozen foods by bringing the frozen product into the form of small particles. Different methods which have for their object to convert liquid products into particles are known. Thus EP-A-0 521 886 describes an apparatus for freezing liquid droplets by means of liquid nitrogen. WO-A-96/29896 discloses an apparatus for simultaneously forming several liquid droplets from which frozen particles can be formed.

US-A-5 126 156 describes a method for manufacturing a 'free-flowing' product stream of beads of frozen milk product. In this American patent it is noted that if the temperature of these ice beads exceeds ―15°F (―26°C) they begin adhering together by freezing together.

DE-U-297 04 924 describes a cream ice which is formed into individual balls and provided with a covering layer of chocolate or glucose syrup. According to this publication the ice balls are formed at ―12°C to ―18°C, after which the coating is applied. Not described is how the coating can be applied and whether the particles are individually provided with a coating. The forming of ice balls at a temperature of ―12°C to ―18°C, as proposed according to this known method, has the drawback that at this temperature it has been found difficult to obtain relatively small spherical particles having a size below 1 cm and to maintain them in this shape. Moreover, it is advisable to enable adjustment of the shape and size of the particles in a continuously operable process, the more so as researches done by the present inventors have shown that the particle size is critical for, inter alia, the flow behavior of the product, and for the acceptance by the consumer.

JP-A-55 096052 and JP-A-07 177850 describe a type of ice sweet which can be obtained by immersing and pulling up a frozen food, or pouring molten chocolate on it or passing it under a curtain of molten chocolate. This way of applying the coating onto sweets has the drawback that no uniform covering can be obtained and/or that the thickness of the coating cannot be properly adjusted. Moreover, it is not possible very well to carry out the immersion method continuously.

The problem remains, however, that although some improvement in the processability or dosability can be obtained by dividing a frozen product into small particles, this improvement is often insufficient to obtain a product which can be readily scooped, divided or otherwise dosed or processed. Moreover, the particles manufactured according to the methods known from the prior art have the drawback that with the lapse of time they begin bonding together, which causes deterioration of the processability and dosability of the frozen food product.

According to the present invention, it has now been found that a scoopable food product consisting of particles which comprise a frozen food can be scooped, divided and/or otherwise processed or dosed very well, if the particles are completely enclosed by a coating suitable for consumption. The frozen food according to the invention thereby obtains an improved processability, that is to say a better scoopability and/or apportionability.

It has been found that a frozen product divided into small particles, which particles are completely enclosed by a coating, has surprisingly good dosing and processing characteristics. Because the particles in the product according to the invention are provided with a coating, the temperature at which the particles begin sticking together may, moreover, be higher than a comparable product consisting of comparable particles without coating.

In the prior art, different coatings for frozen foods are known though. WO-A-99/02042 describes different desserts such as cones, 'cigarettes russes' (filled rolled-up baked biscuits) and other dough articles filled with ice, comprising consumption ice in which lactic acid bacteria are present. According to this international patent application, the consumption ice is coated or surrounded by an edible layer which contains fermentable fibers. The lactic acid bacteria can grow in the gastrointestinal tract, stimulated by the fibers in the covering.

WO-A-95/29596 describes a chocolate-like thick coating for consumption ice in which coating special diglycerides are used to replace the conventional triglycerides. The coating is applied by immersing consumption ices in the molten coating material.

None of the above documents, however, solves the problem of dosing or processing scoopable frozen foods.

An important difference between packed goods and products according to the present invention is, moreover, that the packed goods must also be individually coated, while the products according to the invention can be supplied to a coating step in bulk.

The improved processability of the product according to the invention is specifically expressed in the scoopability and/or the apportionability. The scoopability and/or the apportionability of the product according to the invention is improved by providing a product which consists mainly of small individual particles, which particles can be readily distinguished from each other, because there is no connection between the particles, or that the connection between these particles can be broken by applying little force. The term small particles is understood to mean particles having a largest size of less than 20 mm, for example particles having a size between 1 and 10 mm. The dimensioning of the particles is critical and depends on the method in which the particles are prepared. Of extruded particles for example, the largest dimension will generally exceed that of particles which are obtained by means of dripping. Practical experiments have shown that the dimensions of the particles must range between 1 and 10 mm (inclusive of coating) to obtain a product satisfying the requirements set by consumers with respect to processability, taste and mouthfeel. Further experiments have shown that the particle dimension preferably ranges between 3 and 10 mm (inclusive of coating), because such particles can be advantageously made in a continuous process. Most preferred is a product in which the particles have a dimension of about 4 mm; for such a product can be properly poured out through an outflow opening of a few centimeters. It is of great importance that the product can be packed in a pack which can be readily handled so as to apportion the product. It has been found that, to this end, a packing having an outflow opening of 2 - 10 cm is most suitable. Preferably, there is used a container having an outflow opening of 3 cm, because this - in combination with the proper particle size - leads to a favorable pouring-out behavior with respect to the handling of the container and the mass stream of product which is dosed. A combination according to the invention which is especially preferred is therefore formed by a container having an outflow opening of about 3 cm, which container is filled with particles of 3-4 mm.

To meet the taste of the consumers, the individual particles should contain a sufficient amount of coating. It has been found that at least 5 wt.% coating is required to obtain a relevant flavor effect. Preferably, the particles should contain at least 20 wt.% coating. In general, it is not interesting to cover the particles with more than 50 wt.% coating; for it has been found that at a higher covering it is not possible very well to prepare the particles in a continuous process. For these reasons a product consisting of particles with a covering of 5 - 40 wt.% is preferred, more preferably the covering degree is 10-30 wt.%. Most preferably, the covering is 20-30 wt.%.

Preferably, the particles are not mutually connected, in which case a free-flowing product is obtained. As a rule, free-flowing products have a good apportionability, since they can be readily divided into portions by simply 'pouring out' or flowing out.

The product according to the invention is usually packed and/or stored as a more or less continuous mass in a container such as a box, tray or bag, which container is at least partly filled with the product. The product can be scooped out of the container, which may be done manually, but also mechanically. If this is done mechanically, this is usually directly followed by dosing the product.

An important advantage of the present invention is that the scooping, dividing and/or otherwise processing or dosing of the food product is facilitated according to the invention. The term 'facilitating the scooping, dividing and/or otherwise processing or dosing of the product' may be understood to mean that the force required to scoop, divide and/or otherwise process or dose the product with a suitable piece of tool, such as a spoon or spatula or, for example, a piece of ice ball tongs, is lower than the force that would be required to carry out a comparable operation at a product under otherwise identical conditions, which product only comprises consumption ice, and which consumption ice is not divided into particles, and on which or in which no coating is present. As stated before, a product may also be obtained in which the particles do not at all begin bonding together during storage or transport.

In the present invention, the term 'dimension of particles' is understood to mean the largest dimension of the particle. Of spherical particles, this is the diameter. The particles coated for the food product according to the invention, however, may have forms other than the spherical form, for example a droplet form. It is also possible to shape the particles by means of an extruding device. Thus extrudates are formed which according to the invention, in cross-section, may have practically any possible form and may vary in length from 1 mm to a few centimeters. As stated before, the largest dimension of the particles in the product should be about 1 - 10 mm according to the invention, so as to obtain a scoopable product which also satisfies the other requirements set by the consumer, and which can be manufactured in a continuous process.

Suitable compositions of which the coating may consist are all compositions suitable for consumption which give a coating which in the storage conditions show a reduced tendency to melting together than the food itself. The term storage conditions is understood to mean storage for a longer period, for example a few weeks to one year, at a temperature of between about ―60°C and about ―18°C. Thus it can be realized that the dividing and/or otherwise processing or dosing of the food product is facilitated.

It is supposed that an important reason for the difficult processing or dosing of known frozen foods which consist of particles without coating, results from the presence of water vapor between the particles. This water vapor condenses into water which then freezes into ice or directly ripens into solid ice. Because the food itself often contains water to an important degree, the forces with which the particles without coating are mutually connected are stronger, which results in a more coherent mass, that is to say a more coherent product. It is also possible that particles without coating grow together, because ice crystals from individual particles grow together, which also causes deterioration of the processability.

Through the presence of the coating according to the invention the adhesion of the ice originating from water vapor onto the particles is inferior, and the coherent forces within the food product according to the invention are lower. The adhesion of ice crystals originating from water vapor is specifically inferior if the coating according to the invention has a composition which is hydrophobic or water repellent. The growing together of particles because of ice crystals originating from individual particles can also be efficiently inhibited by applying a coating, which has such characteristics that the outer side of the coated particles of the frozen food is hydrophobic or water repellent. This may be a coating which contains both polar and non-polar parts, the polar part tending to fix to the particle, while the non-polar component is preferably on the outer side of the coated particle. The coating may also consist entirely of edible components, which do not naturally dissolve in water, such as specific microfibers. However, a hydrophobic or water repellent coating is preferred, because such a coating efficiently inhibits both above discussed mechanisms. By applying a coating, there is obtained a product having improved dividing or dosing characteristics.

Examples of products used for coating are generally fats and foods based on fats, which naturally have a melting point ranging between 20 and 37°C, preferably between 30 and 37°C. Besides, mixtures of fats and mono- and/or diglycerides - which naturally have both polar and non-polar characteristics - are also appropriate for use as a coating. Finally, it is possible to use fibrous products, including specific carbohydrate polymers and natural polysaccharides as coating material. The invention relates to the use of both single fat products and composed compositions of several of the above. mentioned suitable edible products.

The importance of the composition of the coating also appears from the fact that the present inventors have found that if an aqueous sugar solution is used to apply a coating to, for example, consumption ice balls, this does not lead to the desired result. The resulting product freezes together and cannot be properly divided. In the prior art, such a coating obtained from an aqueous sugar solution is used to provide, for example, deep frozen spinach - blocks with a coating.

A very suitable food for the food product according to the invention is an consumption ice product. In the specification of the present application and in the attached claims, the term consumption ice product is understood to mean all the kinds of ice products, known to those skilled in the art, suitable for consumption such as cream ice, soft ice, water ice, sherbet ice, yogurt ice, Italian ice, etc. The preparation of consumption ice products is known to those skilled in the art. A consumption ice product usually comprises an emulsion of ice crystals, fat globules and air bubbles in an aqueous phase. Although the aqueous phase is frozen, the solid particles in the ice remain soft. Further possible additives are flavor additives such as fruits, chocolate, egg yolk or caramel, and other flavorings, colorings, and preservatives. Besides, all conventional solid pieces can be included in consumption ice products, such as pieces of nut, chocolate, coconut, etc. A typical consumption ice product composition comprises about 10-45 wt.% dry matter, while the rest is formed by an aqueous phase. The dry matter has as typical composition 0-20 wt.% fat, 0-12 wt.% low-fat milk powder, 0-30 wt.% carbohydrates, 0.2-1 wt.% emulsifiers and/or stabilizers, and flavorings. The dry matter content is a choice depending on the desired characteristics of the frozen product. In this respect specifically and for example the mouthfeel during consumption is important.

Cream ice comprises at least 7 wt.% milk fat, about 14 wt.% solid constituents, of which less than 0.5 wt.% stabilizers, 0.2 wt.% emulsifiers and less than 50% air and usually an arbitrary amount of sugar. Cream ice is very suitable for use as food for the product according to the invention.

A typical product according to the invention comprises about 50-75 wt.% cream ice and 25-50 wt.% coating, the mutual ratio depending on the dimension of the particles. The smaller the particle, the greater the relative proportion of the coating material at about constant layer thickness. The mutual weight ratio between the amount of coating and food is important for the eventual flavor experience of the product. The invention thus provides an extra possibility to meet the flavor preferences of consumers, which is an important advantage.

As food, water ice may also be used. This is a solution of sugar in water, to which an amount of colorings and flavorings, and optionally a stabilizer composition is added.

Very suitable coating materials for use in consumption ice products according to the invention comprise cacao butter and/or fats replacing cacao butter. Examples of such materials are chocolate and cacao fantasy. The combination of taste and mouthfeel of consumption ice and such materials, specifically chocolate, is generally experienced by consumers to be very pleasant. Chocolate contains cacao constituents, milk constituents and maximally about 55 wt.% sugar. A typical chocolate composition suitable for use as coating material according to the invention contains 11-15 wt.% cacao mass, 14-18 wt.% milk powder (including 24 wt.% milk fat), 46-54 wt.% sugar, 22-25 wt.% cacao butter and maximally 0.5 wt.% lecithin. A typical cacao fantasy composition suitable for use as coating material according to the invention contains 25-38 wt.% of a saturated fat, 46-56 wt.% sugar, 14-18 wt.% cacao powder, 0.2-1.0 wt.% emulsifier, in which a part of the sugar and/or cacao powder can be replaced by low-fat milk powder. Optionally, the cacao powder in the cacao fantasy compositions may be left out, and colorings and flavorings may be added to obtain a desired flavor (for example a fruit flavor).

Other foods which can be prepared to food products according to the invention are culinary sauces, savory sauces, egg products, and whipped cream. As coating material a composition containing essentially fat may be used, such as a conventional, hardened vegetable fat having a relatively high melting point such as hardened coconut fat, hardened palm oil or palm kernel fat. A composition of fat and emulsifiers in which the emulsifier is high-melting, is also very suitable as coating material.

The thickness of the coating will depend on the use and on the desired flavor effect. In general, the coating will have a thickness of about 0.02-2 mm, preferably about 0.1-1 mm. If the coating is thinner than 0.02 mm, the product will freeze together too easily. If the coating is thicker than 2 mm, inter alia the flavor of the coating becomes too predominant.

The particles in the food product according to the invention should not be too large. The upper limit is determined by, inter alia, the fact that the product should be scoopable of otherwise processable. On the other hand, from practical considerations the particles should not be too small, also because with too small particles and a given minimum layer thickness the coating would begin predominating too much in the flavor and mouthfeel of the product. Preferably, the particles have a dimension of about 3-10 mm.

A suitable method for the manufacture of the food product according to the invention comprises the following steps:
a) forming particles of a frozen food;
b) contacting the particles from the foregoing step with a coating-forming material under such conditions that a coating is formed on and around the particles.

Preferably, step a) is carried out by dripping a food in liquid form in an ambiance in which the liquid food freezes. This ambiance is preferably deep cooled, that is to say deeper than ―80°C. This has the advantage that the liquid mix can be converted into particles in one time and that the resulting particles need not be extra cooled before coating them in step b) by coating them with the liquid coating material. In this manner - provided the particles have the proper dimension (that is to say 1-10 mm) - the product according to the invention may be continuously prepared in a method which comprises the above-mentioned two steps. Especially preferred is the method in which cooling is effected with liquid nitrogen having a boiling point of about ―196°C, because this is not only colder that the above ―80°C, but is also completely acceptable from a viewpoint of feed technology.

Suitable as food in liquid form is a solution having a dry matter content of 15-45 wt.%. This solution has, for example, a temperature of 4-10°C and is introduced dropwise into a freezing apparatus with liquid nitrogen. As a result thereof, there are formed more or less round balls having a size which can be adjusted by, for example, the supply speed, whether or not in combination with the opening of the supply line.

The size of the spherical particles is determined, inter alia, through the surface tension of the food to be frozen. The size of the particles is also determined by process conditions, such as process temperature and flow rate and residence time of the food. Besides spherical particles, strings comparable to the well-known chocolate sprinkles, are thus obtained as particles. By applying a suitable nozzle, different forms can be made by means of extrusion, as mentioned above. A possible apparatus for carrying out step a) is formed by the IQF-CRYOGRAN™ (IQF Inc, Ontario, Canada). In this apparatus liquid nitrogen is circulated. Because the liquid nitrogen flows downward in a spiral chute, a proper heat exchange is obtained. This apparatus operates continuously; the liquid food is supplied continuously, and the frozen particles are discharged continuously.

If the temperature of the particles required for step b) is higher or lower than the temperature of the particles coming from step a), a temperature stabilizing step may optionally be inserted between step a) and step b). The aim of this step is to bring the temperature of the particles to the desired value more or less uniformly.

The application of the coating in step b) is preferably carried out by setting the particles in movement and sprinkling them with the coating-forming material in liquid form. This may, for example, be effected by a mixer, such as a high-speed paddle mixer. The temperature at which step b) is carried out is about ―160 tot ―20°C. The coating material is supplied at a temperature of 10-80°C and intensively mixed with the ice particles. The coating material thereby adheres to the particles and divides itself such that a layer thickness of 0.02-2 mm results. The coating is formed completely around the particles in such a manner that the particles are in contact with each other at least substantially only via the coating material. The layer thickness and the division is determined by, inter alia, the viscosity and the surface tension of the coating material. A suitable apparatus for carrying out step b) is a FORBERG™ mixer (Halvor Forberg AS, Larvik, Norway), for example the FORBERG™-F80. Those skilled in the art will be capable to obtain the proper layer thickness for a specific composition of the frozen food and a specific coating by adjusting factors such as temperature, stirring speed, flow rate, and residence time in step b). The proper adjustments of these factors can be determined by routine experiments.

The coated product is discharged from the apparatus by means of a lock suitable for the purpose and known to those skilled in the art, at a temperature of maximally ―4°C. If necessary, the product is further cooled and supplied to a packing machine known to those skilled in the art. After packing the thus apportioned units of the product are stored at the conventional deep-freeze temperature of about ―18°C. During storage the product does not freeze together or hardly freezes together. By means of the method according to the invention, properly processable coated frozen foods can be obtained which are scoopable and/or have free-flowing characteristics and maintain them, even during prolonged storage at maximally -18°C. Through the presence of the coating according to the invention, the individual particles do not freeze together or hardly freeze together, even not if the product first warms up to below ―4°C and is then frozen or deep-frozen again. Thus the products according to the invention can be temporarily brought to higher temperatures of maximally ―4°C, without appreciable deterioration of the processability or other product characteristics.

The method according to the invention is preferably carried out continuously.

Because the particles in the scoopable food product according to the invention do not freeze together, a good dosability and a good apportionability are obtained. Moreover, it is possible to provide entirely new consumable forms of such frozen foods. There can also be prepared mixed products such as consumption ice balls mixed with rice crisps, nut pieces, chocolate sprinkles or fruit-flavored sprinkles. The present invention enables those skilled in the art to create a very large number of variations of color and flavor combinations. Moreover, the good possibility of apportioning and dosing enables those skilled in the art to use the product as cooling and flavor ingredient for a cold drink.

### Example 1

A liquid cream ice base mixture (8 wt.% milk fat, 0.2 wt.% stabilizers, 0.2 wt.% emulsifiers, in total 14 wt.% solid constituents) was brought to a temperature of 8°C. A continuous stream of 30 dm³/hour of the liquid cream ice composition was supplied to an IQF-CRYOGRAN™ freezer. The average residence time of the particles in the freezer was about 5 s. Subsequently, the particle stream was transmitted into a FORBERG™ F60 mixer to which was also supplied a continuous stream of molten chocolate (12 wt.% cacao mass, 16 wt.% milk powder (including 24 wt.% milk fat), 49 wt.% sugar, 23 wt.% cacao butter (containing maximally 0.3 % lecithin according to statement)) of 15 dm³/hour having a temperature of 40°C. The average residence time of the particles in the mixer was about 5 min. Subsequently, the product was packed and stored at a temperature of ―18°C. After 4 days a sample was taken, and it was found that the product was still completely free-flowing. Even after 3 months of storage at ―18°C the product could readily be dosed from the packing by tilting it, after which the product flowed out. After warming up in an ambiance of ―6°C the product was still completely free-flowing.

### Example 2

Example 1 was repeated, but now an ice mix was used as base, which contained 5 wt.% milk fat and 0.4 wt.% of a stabilizer/emulsifier mixture. The fat-free dry matter content was 27.4 wt.%. As coating material a white imitation chocolate was used (50.8 wt.% sugar, 12 wt.% milk powder, 37 wt.% fat, 0.5 wt.% lecithin, 0.85 wt.% commercially available banana aroma preparation and 0.25 wt.% fat-soluble commercially available yellow dye). The other steps from Example 1 were carried out analogously.

The end product was completely free-flowing. Even after 3 months of storage at ―18°C the product could be readily dosed from the packing by tilting it, after which the product flowed out. After warming up in an ambiance up to ―6°C the product was still free-flowing.

### Example 3

### Layer thickness of the coating as function of particle diameter at constant covering degree

Example 1 was repeated, but the particle size was varied. Two series of cream ice product were made, each at a different covering degree. In the first series, there were made ice balls in which the coating constituted 20 wt.% of the total weight. Because the covering degree was kept constant, the layer thickness of the coating varied with the particle size per series. In the second series, the covering with chocolate was 40 wt.%. Subsequently, the flow characteristics of the resulting particles were examined by pouring out the resulting product through an outflow opening of 3 cm.

**Table 1**

| Flow characteristics of ice balls with varying diameter and coating layer thickness. | | | | |
|---|---|---|---|---|
| | Coating 20 wt.% | | Coating 40 wt.% | |
| diameter ice ball (without coating) / [mm] | layer thickness coating / [mm] | flow characteristics*) | layer thickness coating / [mm] | flow characteristics*) |
| 1 | 0.020 | -- | 0.039 | - |
| 2 | 0.04 | - | 0.077 | + / - |
| 3 | 0.06 | - | 0.116 | + |
| 4 | 0.08 | + / - | 0.154 | + |
| 5 | 0.1 | + | 0.193 | + |
| 6 | 0.12 | + | 0.232 | + |
| 7 | 0.14 | + | 0.27 | + |
| 8 | 0.16 | + | 0.309 | + |
| 9 | 0.18 | + | 0.347 | + |
| 10 | 0.2 | + | 0.386 | + |

| | | | | |
|---|---|---|---|---|
| *) -- does not flow at all as a result of sticking together - particles stick such that lumps are formed + / - some particles stick, but the product is more or less free-flowing + completely free-flowing | | | | |

If it is assumed that a covering of at least 20 wt.% is required to obtain the desired flavor effect, it follows from this Example that the particle size of the product according to the invention is at least 3 mm, preferably at least 4 mm. If a higher covering, such as 40 wt.%, is used, the minimum particle size is 1 mm, preferably 2 mm.

### Example 4

### Outflow as function of particle diameter

The product obtained according to the invention is packed in a container having an outflow opening of 3 cm with a circular cross-section. Such a dimension of the outflow opening can be excellently used in conventional packing which are appreciated by consumers. Moreover, such an outflow opening is very suitable for use in a packing such as the packing appreciated by consumers, because the maximum flow rate of particles provided with a coating according to the invention in such an opening is about 0.13 kg/s. Such a maximum flow rate is experienced to be pleasant. The maximum flow rate is reached if such a packing is kept vertically. By keeping the packing more horizontal, the flow rate can be controlled by the consumer.

The above-mentioned maximum flow rate of 0.13 kg/s applies to very small particles, that is to say smaller than 1 mm. When the diameter of the particles is varied, it is found that the maximum flow rate decreases with increasing particle diameter. When the particle diameter exceeds 10 mm, the maximum flow rate is less than 0.03 kg/s, which is not acceptable.

From Examples 3 and 4 it follows that the dimensions of the particles should be between 1 and 10 mm. Further experiments have shown that the particle dimension is preferably between 3 and 10 mm. Most preferred is a product in which the particles have a dimension of about 4 mm.

### Example 5

### Preparation of particles with varying covering degree

Example 1 was repeated, but now the amount of chocolate used was varied so as to examine the influence of the covering degree on the coating process. During coating, the ice particles warm up from the temperature they have when they come out of the CRYOGRAN™ freezer (about ―80°C) to a final temperature of ―20°C. This final temperature is very suitable for storing the product. Thus a covering degree up to 40 wt.% could be reached (based on the total weight of the particles), while only a small part of the cream ice fraction melted. If a covering of 20 wt.% is aimed at, no appreciable melting of the cream ice fraction of the particles is noted (less than 3 wt.%).

In principle, the covering degree has no lower limit, although a covering degree of less than 10 wt.% is usually too low to effect a sufficient flavor effect with the consumer.

### Example 6

### Coating with imitation chocolate

A liquid cream ice base mixture containing 5 wt.% milk fat and 0.4 wt.% of a stabilizer/emulsifier mixture was supplied at 4°C as a continuous stream to an IQF-CRYOGRAN™ freezer. The average residence time of the particles in the freezer was about 15 seconds. Subsequently, the particle stream (particle diameter: 3 - 6 mm) was transmitted at a temperature of about ―40°C into a FORBERG™ F20 mixer. As coating material a brown imitation chocolate (Y16-CK59 *ex* Callebaut, Belgium) was used (53.3 wt.% vegetable fat; 26.1 wt.% sugar; 11.2 wt.% low-fat cacao powder; 9.0 wt.% cacao mass; < 1% soya lecithin; < 1% vanillin). This molten imitation chocolate was supplied as a continuous spray (by means of nozzle QVV 4003 at 6 bar) at a temperature of 50°C. The average residence time of the particles in the mixer was about 3 minutes, which resulted in a coating of 30 wt.%. Subsequently, the product was packed and stored at a temperature of ―18°C. This product remained completely 'free-flowing' at this temperature for more than 3 months.

### Example 7

### Coating with dark (genuine) chocolate

Example 6 was repeated, but now a dark genuine chocolate (ICE-45-D) was used as coating material having as composition 39.7 wt.% sugar; 33.2 wt.% cacao mass; 22.1 wt.% cacao butter; 4.6 wt.% water-free milk fat; < 1% soya lecithin; < 1% vanillin. In molten condition, however, this chocolate was too viscous to obtain a nice continuous spray. For this reason, this chocolate was diluted with coconut fat (25%) to thus obtain a coating having a viscosity approaching that of imitation chocolate (Example 6). The other steps from Example 6 were carried out analogously. The final product remained completely 'free-flowing' at a temperature of ―18°C for more than 3 months.

### Example 8

### Coconut fat

Example 6 was repeated, but now coconut fat was used as coating material. Added to this coconut fat was 1% β-carotene to enable visual observation of the coating. The other steps from Example 6 were carried out analogously. The final product remained completely 'free-flowing' at a temperature of ―18°C for more than 3 months. The final product gave a waxy mouthfeel.

### Example 9

### Testing different nozzles at different pressures

Example 6 was repeated, but now different nozzles (QVV 4001, QVV 4002, QVV 4003, QVV 4004, QVV 4006 and QVV 4008) were tested at different pressures (2-3-4-5-6 bar). The most continuous and widest spray was obtained with nozzle QVV 4003 at 6 bar. This resulted in a nicer division of the coating. As coating material, there was used a brown imitation chocolate (T11-KH50) having as composition 38.4 wt.% vegetable fat; 29.6 wt.% sugar; 11.3 wt.% low-fat cacao powder; 10.4 wt.% hardened vegetable fat; 10.0 wt.% whey powder; < 1% soya lecithin; < 1% vanillin. With this nozzle type and this pressure the throughput was about 1.7 dm³/min. The other steps from Example 6 were carried out analogously. The final product remained completely 'free-flowing' at a temperature of ―18°C for more than 3 months.

### Example 10

### Preparation of particles of different size

Example 6 was repeated, but now larger particles were made in an IQF-CRYOGRAN freezer. Subsequently, the particle stream (particle diameter: 11-12 mm) was transmitted into a FORBERG™ F20 mixer. The other steps from Example 6 were carried out analogously. The final product remained completely 'free-flowing' at a temperature of ―18°C for more than 3 months.

### Extension Example 11

### Preparation of particles with varying covering degree

Example 6 was repeated, but now the amount of coating used was varied so as to examine the influence of the covering degree on the flow characteristics. As coating material a brown imitation chocolate (Y16-CK59) was used (53.3 wt.% vegetable fat; 26.1 wt.% sugar; 11.2 wt.% low-fat cacao powder; 9.0 wt.% cacao mass; < 1% soya lecithin; < 1% vanillin). This molten imitation chocolate was supplied as a continuous spray (by means of nozzle QVV 4003 at 6 bar) at a temperature of 40°C. The residence time of the particles in the mixer was varied, which resulted in a coating of 5-10-15-20-25-30-40 wt.%. Subsequently, the product was packed and stored at a temperature of ―18°C. Only the product having a coating of 5 wt.% was no longer completely 'free-flowing'. The rest remained completely 'free-flowing' at this temperature for more than 3 months.

Although the above Examples were carried out with cream ice and chocolate coating, corresponding results were obtained for other foods with other coating materials.

## Claims

1. A processable food product consisting of particles having a dimension of 1-10 mm which comprise a frozen food and are provided with a coating suitable for consumption.

2. A food product according to claim 1, in which the outer side of the coating is hydrophobic and/or water repellent.

3. A food product according to any one of the preceding claims, which is a consumption ice product.

4. A food product according to any one of the preceding claims, in which the coating comprises an edible fat, which fat is preferably cacao butter.

5. A food product according to any one of the preceding claims, in which the coating has a thickness of 0.02-2 mm and preferably a thickness of about 0.1-1 mm.

6. A food product according to any one of the preceding claims, in which the coating is 5-40 wt.% and preferably 10-30 wt.%, based on particle and coating.

7. A packing having an outflow opening of 2 - 10 cm, containing a product according to any one of the preceding claims.

8. A method for the manufacture of a scoopable food product, comprising the following steps:
a) forming a bulk of particles of a frozen food; and
b) contacting the particles in bulk from the foregoing step with a coating-forming material under such conditions that a coating is formed on and around the particles.

9. A method according to claim 8, in which step a) is carried out by dripping a food in liquid form in an ambiance in which the liquid food freezes.

10. A method according to claim 9, in which the ambiance is kept at the required temperature by means of liquid nitrogen.

11. A method according to any one of claims 8-10, in which step b) is carried out by setting the particles in movement and sprinkling them with the coating-forming material in liquid form.
